# EUROPEAN PATENT SPECIFICATION

(11) **EP 1 782 986 B1**
(45) Date of publication and mention of the grant of the patent: **25.06.2008**
(21) Application number: 06019444.6
(22) Date of filing: 18.09.2006
(51) Int. Cl.: B60J 7/06

(54) **Improved folding support for guards of lorries or the like**
Verbesserte faltbare Trägerstruktur für Planen von LKW's oder dergleichen
Support pliant amélioré pour bâche de camion ou similaire

(30) Priority: 21.09.2005 BE 200500456
(43) Date of publication of application: 09.05.2007
(73) Proprietor: BVBA VERSUS-OMEGA, 3660 Opglabbeek (BE)
(72) Inventor: Rogiers, Erik, 3600 Genk (BE)
(74) Representative: Donné, Eddy

(56) References cited:
- EP-A1- 0 882 612
- EP-A2- 0 890 465
- EP-A2- 1 122 108
- EP-B1- 0 883 507

## Description

The present invention concerns an improved folding support for guards of lorries, in particular for foldable guards with a sheet to seal the loading space.

The lorries onto which such guards are usually applied generally consist of a chassis on wheels onto which is provided a frame which defines the loading space.

To this end, several standing supports and piles are generally provided on the chassis, usually on the longitudinal sides of the chassis, onto which is provided a guard frame.

Such a guard frame mainly consists of two longitudinal purlins, one on each side of the lorry, and of several cross girders which can be moved on the above-mentioned longitudinal purlins.

The cross girders are provided with rolling slides on their far ends, whereas the longitudinal purlins are provided with corresponding guides.

On top of the cross girders is provided a sheet which is connected at regular distances to a cross girder or to the matching rolling slides.

In order to guide the sheet while opening the guard, the neighbouring cross girders are mutually connected near their far ends, in particular at the rolling slides provided thereon, by means of folding supports.

Such a folding support is thereby designed such that when two neighbouring cross girders are moved towards each other, the sheet is folded upward.

Such folding supports consist for example, and according to a known embodiment, of a plastic or rubber belt or a plastic plate which is provided with holes at its far ends for fixing the folding support to the rolling slides.

In order to promote the upward folding of such folding supports, at least if they are made as plastic plates, they are usually provided with thin zones forming hinges in the vicinity of the attachment of the folding supports to the rolling slides.

According to another embodiment as described in EP 0,883,507, two hinges are additionally provided in the centre of the folding support. The folding support in this case consists of two rigid, lateral plate parts which are mutually connected by means of a central part which is situated between the above-mentioned lateral plate parts.

According to this embodiment, the folding support as a whole and thus the three above-mentioned parts are made in one piece out of injection-moulded plastic.

The two rigid, lateral plate parts are hinge-mounted to the central part, and the hinges are formed of thin zones, in particular a very local, thin folding zone with a small width, typically in the order of magnitude of 1 to 5 mm, and with a small thickness, typically between 0.4 and 2 mm, and preferably even thinner, namely between 0.5 and 1 mm.

The problem with the above-mentioned known embodiments of the folding supports is that the sheet is dimensioned such that, when the guard is closed, it is pulled taut.

When opening the guard, the different folding supports push the sheet upward and an additional tension is hereby created in the sheet.

This tension must be overcome, and that is why a lot of force must be exerted to open such a guard.

Additionally, a slight error in the dimensions or the fixing of the sheet or any unforeseen external parameter, such as for example frosty cold, may damage the folding support.

An additional problem with the described folding supports made in one piece out of injection-moulded plastic and whereby the two rigid lateral plate parts are hinge-mounted to a central part by means of thin zones, is that the thin zones are liable to cracks.

That is why, in practice, the thin zones are made of a second material, which makes the folding supports much thinner. Even then, the thin zones remain liable to cracks, which manifests itself in particular under extreme temperatures.

Another problem of the known folding supports arises just before the sheet is entirely closed. Indeed, when the folding supports are stretched, they receive a heavy blow and undergo a sudden increase in tensile force. This increase in tensile force must be absorbed by the connections of the folding supports to the rolling slides and further by all intermediate zones of the folding support.

It is clear that especially the folding elements which are provided with thin local zones functioning as hinges, either at the connection of the folding supports to the rolling slides, or at the hinged connection of the lateral parts to a central part, offer less resistance to the above-mentioned tensile forces and are consequently more liable to cracks.

Especially when the weather is extremely cold, cracks often occur as the plastic is more rigid then.

Another problem of the known folding supports occurs when one starts to open the sheet, right before the first movement of the folding supports.

Indeed, opening the guard requires a relatively large initial force as the forces are parallel then to the stretched folding supports.

In case the folding supports are provided with a central part which is hinge-mounted to the lateral parts by means of thin zones, it is clear that the large forces which are exerted to overcome the horizontal stretched position of the folding supports at the initial upward movement of the folding supports may cause damage, for example when the central part is not pushed evenly up at both hinges, i.e. is pushed up in an asymmetrical manner.

The present invention aims to remedy the above-mentioned and other disadvantages and provides an improved folding support for guards of lorries or the like.

To this end, the present invention concerns an improved folding support for guards of lorries or the like comprising two rigid plate parts which are connected to each other with their neighbouring ends by means of a bent or twisted, deformable middle part which functions as a folding zone of the folding support, which deformable middle part is bent or twisted when the guard is in closed state.

A major advantage of the folding support according to the invention consists in that it can be made as a single injection-moulded piece, whereby the folding of the folding support is improved without introducing any weak, thin zones.

Moreover, the bent or twisted middle part can be compressed and extended, so that many of the critical parameters get a higher tolerance.

Indeed, the folding supports according to the invention with a bent or twisted middle part make it possible to manufacture the sheet with less precision, which implies a large saving in costs.

The flexibility which is obtained thanks to the bent or twisted middle part will also make sure that the connections of the folding supports to the rolling slides and also all the intermediate zones of the folding supports; when closing the guard, will be less loaded, since a major part of the tensile forces will be absorbed by the extensibility of the bent or twisted middle part.

Moreover, the bent or twisted middle part will make sure that less initial forces are required to open the guard and that damage by pushing up the folding supports in an asymmetrical manner is prevented.

In order to better explain the characteristics of the invention, the following preferred embodiment of an improved folding support according to the invention is given as an example only, with reference to the accompanying drawings, in which:
figure 1 schematically represents a preferred embodiment of an improved folding support according to the invention in perspective;
figure 2 represents a view according to arrow F2 in figure 1;
figure 3 represents the part indicated by F3 in figure 1 to a larger scale.

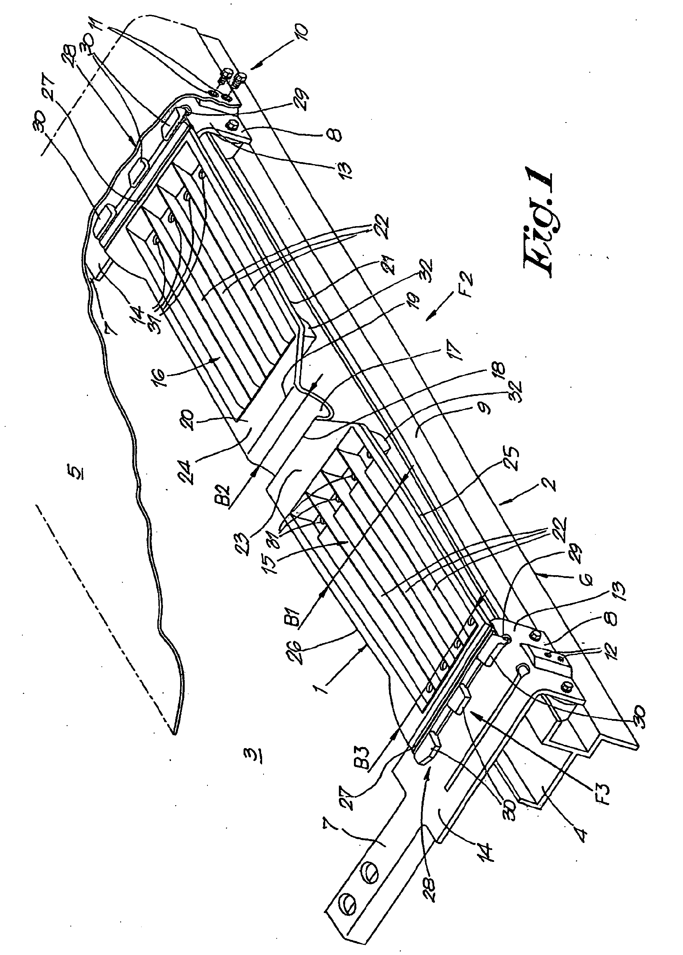

Figure 1 represents an improved folding support 1 for the guard 2 of a lorry or the like with a loading space 3.

Such a guard 2 mainly consists of a cover frame 4 on which is provided a sheet 5. The cover frame 4 is made of two longitudinal purlins 6, one on each longitudinal side of the loading space 3 of the lorry, and provided on supports (not represented) which are situated near the sides of the chassis.

The two longitudinal purlins 6 are mutually connected by different cross girders 7 which can be moved on the above-mentioned longitudinal purlins 6.

The cross girders 7 are provided with rolling slides 8 on their far ends to that end, whereas the longitudinal purlins 6 are provided with corresponding guides 9.

On top of the cross girders 7 is provided the sheet 5 which is connected to the accompanying rolling slides 8 at regular distances, in particular by means of a screw and nut connection 10 provided through rings 11 in the sheet 5 and through passages 12 at the sides 13 and/or on the tops 14 of the rolling slides 8.

The neighbouring cross girders 7 are mutually connected at the rolling slides 8 provided thereon by means of the folding supports 1 according to the invention.

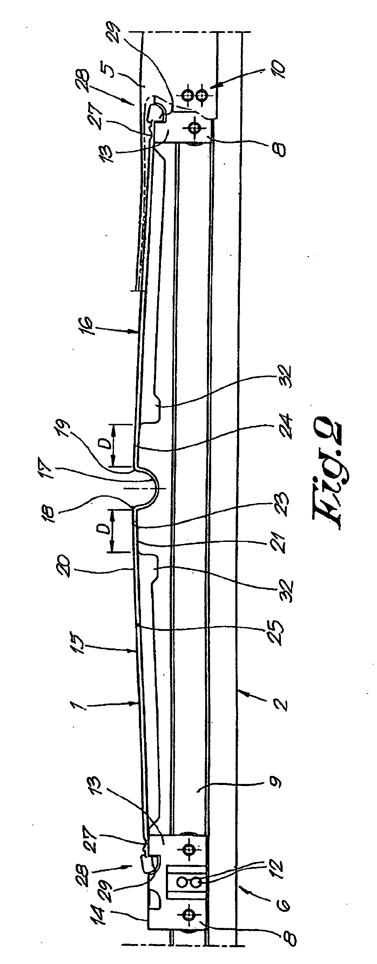

The folding support 1 is made in one piece here out of injection-moulded plastic, and in this embodiment it consists of two plate parts 15 and 16 which are connected to each other with their neighbouring ends by means of a bent or twisted, in this case semicircular bent, deformable middle part 17 which functions as a folding zone of the folding support 1, as represented in greater detail in figure 2.

At the transitions 18 and 19 from the middle part 17 to the two plate parts, 15 and 16 respectively, the bent middle part 17 is directed mainly crosswise to these plate parts 15 and 16. The transitions 18 and 19 are preferably made somewhat thicker than the plate parts 15 and 16 in the immediate vicinity of the transitions 18 and 19, and also thicker than the bent middle part 17.

The plate parts 15 and 16 have a top side 20 on which the sheet 5 will rest, and an opposite lower side 21. The bent middle part 17 extends from the transitions 18 and 19 in the direction of the lower side 21 of the plate parts 15 and 16.

The plate parts 15 and 16 are made rigid, and to that end they are provided with ribs 22 in this embodiment which are provided on the top side 20 of the plate parts 15 and 16 and which extend as of the vicinity of the far ends directed away from each other up to the connecting pieces 23, 24 respectively, which start as of the transitions 18 and 19 and reach up to a distance D thereof.

The plate parts 15 and 16 have a predominantly constant width B1 over the ribbed zone, as opposed to the connecting pieces 23 and 24 which gradually narrow towards the corresponding transitions 18 and 19 up to a width B2, in this embodiment thanks to the taper of a first side edge 25 which gradually evolves to the axial line of the plate parts 15 and 16.

De width B2 corresponds to the width of the central middle part 17 in this case.

On the other far ends, the plate parts 15 and 16 are made gradually wider, and the other side edge 26 leaps to one side. The plate parts 15 and 16 thus have a width B3 at their free ends.

Moreover, at a distance from their free ends, the plate parts 15 and 16 are provided with hinges 27 formed of local, thin zones which are mainly at right angles to the axial line of the plate parts 15 and 16.

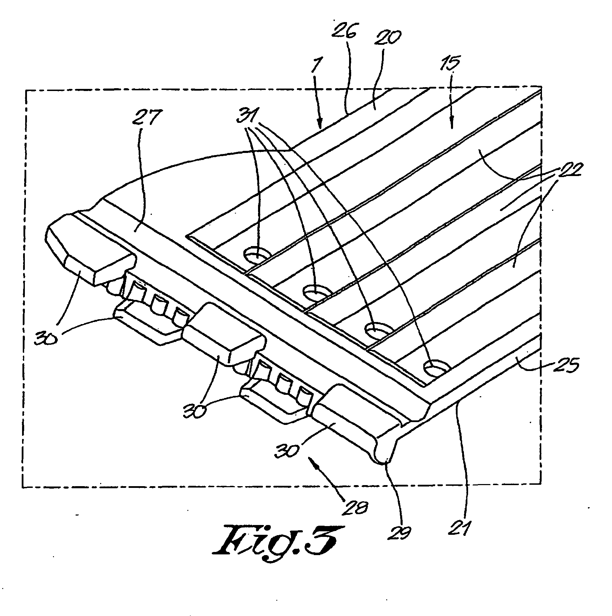

Further towards their free ends, the plate parts 15 and 16 are provided with connecting means 28, in this example in the shape of an edge 29 directed towards the lower side 21 which is provided both at the top and at the bottom with lateral protrusions 30 as represented in figure 3.

The plate parts 15 and 16 are provided with recesses 31 between the successive ribs 22 and on their lower side 21.

Further, the plate parts 15 and 16 are provided with a deepened part 32 on their lower side 21 and in the vicinity of the corresponding connecting pieces 23, 24 respectively, which extends here over a major part of the width B1 of the plate parts 15 and 16.

The working of the folding support 1 according to the invention is efficient and as follows.

Starting from the closed position of the guard 2 as represented in figure 1, whereby the sheet 5 is pulled taut and whereby the folding supports 1 are all stretched, possibly even elongated as a result of the deformation of the deformable middle part 17, the opening may begin by exerting a force on the cross girders 7.

The required force is relatively restricted compared to the force required to open a guard provided with the known folding supports, thanks to the somewhat slanting orientation of the plate parts 15 and 16 which is obtained as the bent middle part 17 and the deepened parts 32 rest on the longitudinal purlins 6 in the closed position of the guard 2.

The guard 2 can then be further opened smoothly and without all too high tensions being built up in the sheet 5. For, increased tensions in the sheet 5 are transformed in deformations of the deformable middle part 17, i.e. in the compression thereof.

Moreover, the deformable middle part 17 does not induce any upward deformation as such when the guard 2 is opened, as opposed to the known folding supports.

Additionally, we note that if one or several folding supports 1 are somewhat elongated in the closed position of the guard 2, in particular due to the deformation of the deformable middle part 17, this deformation will be removed while the guard 5 is being closed, as a result of which also the sheet 5 will get some play.

The narrowing at the connecting pieces 23 and 24 and at the deformable middle part 17 is designed to provide the folding support 1 with the required flexibility in the lateral direction as well.

Indeed, by directing the side edge 25 deviating towards the centre to the outside of the loading space 3, the folding support 1 will tend to the inside in case of a possibly slantingly directed cross girder 7, in particular to the centre of the loading space 3, which is possible thanks to the flexibility of the folding support 1 according to the invention.

The widening of the folding support 1 near the far ends situated away from each other prevents any unwanted loading of the folding support 1 at the hinges 27 and moreover guarantees a wide zone for providing the connecting means 28.

The transitions 18 and 19 of the middle part 17 towards the two plate parts, 15 and 16 respectively, are somewhat thicker than the adjacent parts of the folding support 1, so that cracks are prevented there.

The hinge function is provided for by the deformable middle part 17. The folding is carried out in a spread zone and it is promoted by among others the total length and the shape of the deformable middle part 17.

The distributed character of the folding zone prevents too high tensions in the material.

It is clear that the bent or twisted middle part 17 must not necessarily be semicircular, but that it may have any shape whatsoever and even the shape of an open polygon.

The recesses 31 are designed to discharge water which might have ended up between the ribs 22.

The present invention is by no means restricted to the embodiments described as an example and represented in the accompanying drawings; on the contrary, such an improved folding support according to the invention may be realised according to different variants while still remaining within the scope of the invention.

## Claims

1. Improved folding support (1) for guards (2) with a sheet (5) of lorries or the like, whereby the folding support (1) comprises two rigid plate parts (15,16) which are connected to each other with their neighbouring far ends, **characterised in that** the neighbouring for ends are connected to each other by means of a bent or twisted deformable middle part (17) which functions as a folding zone of the folding support (1), which deformable middle part is bent or twinted when the guard (2) is in closed state.

2. Improved folding support (1) according to claim 1, **characterised in that** the middle part (17) has a semicircular shape.

3. Improved folding support (1) according to claim 1, **characterised in that** the two rigid plate parts (15,16) have a top side (20) and a lower side (21), and **in that** the middle part (17) mainly extends on the lower side of the plate parts (15,16).

4. Improved folding support (1) according to claim 1, **characterised in that** the folding support (1) is made in one piece in a mould.

5. Improved folding support (1) according to claim 1, **characterised in that** the plate parts (15,16) are connected to the deformable middle part (17) by means of transitions (18,19); and **in that** the plate parts (15,16) have a top side (20) on which the sheet (5) will rest, and an opposite lower side (21); **in that** the plate parts (15,16) are provided with ribs (22) which extend as of the vicinity of the far ends directed away from each other up to a distance (D) from the transitions (18,19) and **in that** the plate parts have a width (B1) at this ribbed zone.

6. Improved folding support (1) according to claim 1 and 5, **characterised in that** the plate parts (15,16) comprise connecting pieces (23,24) which extend as of the transitions (18,19) up to a distance (D) thereof, and **in that** the connecting pieces (23,24) narrow towards the transitions (18,19), or are at least made narrower, with a minimal width (B2) which is smaller than the width (B1) of the ribbed zone of the plate parts (15,16).

7. Improved folding support (1) according to claim 1 and 5, **characterised in that** the plate parts (15,16) are provided with hinges (27) and connecting means (28) at their free ends, and have a width (B3) there which is larger than the width (B1) of the ribbed zone of the plate parts (15, 16).

8. Improved folding support (1) according to claim 1 and 5, **characterised in that** the plate parts (15,16) between the successive ribs (22) are provided with recesses (31).

9. Improved folding support (1) according to claim 1 and 5, **characterised in that** the plate parts (15,16), on their lower side (21) and in the vicinity of the corresponding connecting pieces (23,24), are provided with at least a deepened part (32) which serves as a bearing surface for the folding support (1) in its unfolded and stretched condition.

## Patentansprüche

1. Verbesserte faltbare Trägerstruktur (1) für Abdeckeinrichtungen (2) mit einer Plane (5) von Lastkraftwagen oder dergleichen, wobei die faltbare Trägerstruktur (1) zwei starre Plattenteile (15,16) umfasst, die mit ihren benachbarten Enden miteinander verbunden sind, **dadurch gekennzeichnet, dass** die benachbarten Enden mittels eines gebogen oder geknickt verformbaren Mittelteils (17) miteinander verbunden sind, das als Faltzone der faltbaren Trägerstruktur (1) fungiert, welches verformbare Mittelteil gebogen oder geknickt ist, wenn die Abdeckeinrichtung (2) sich in geschlossenem Zustand befindet.

2. Verbesserte faltbare Trägerstruktur (1) nach Anspruch 1, **dadurch gekennzeichnet, dass** das Mittelteil (17) eine halbrunde Form hat.

3. Verbesserte faltbare Trägerstruktur (1) nach Anspruch 1, **dadurch gekennzeichnet, dass** die zwei starren Plattenteile (15,16) eine Oberseite (20) und eine Unterseite (21) aufweisen und dass das Mittelteil (17) sich hauptsächlich an der Unterseite der Plattenteile (15,16) erstreckt.

4. Verbesserte faltbare Trägerstruktur (1) nach Anspruch 1, **dadurch gekennzeichnet, dass** die faltbare Trägerstruktur (1) einstückig in einem Formwerkzeug hergestellt ist.

5. Verbesserte faltbare Trägerstruktur (1) nach Anspruch 1, **dadurch gekennzeichnet, dass** die Plattenteile (15,16) mittels Übergängen (18,19) mit dem verformbaren Mittelteil (17) verbunden sind; und dass die Plattenteile (15,16) eine Oberseite (20), worauf die Plane (5) aufliegen wird, und eine entgegengesetzte Unterseite (21) aufweisen; dass die Plattenteile (15,16) mit Rippen (22) versehen sind, die sich von der Nähe der voneinander weg gerichteten Enden bis zu einem Abstand (D) zu den Übergängen (18,19) erstrecken, und dass die Plattenteile an dieser gerippten Zone eine Breite (B1) aufweisen.

6. Verbesserte faltbare Trägerstruktur (1) nach Anspruch 1 und 5, **dadurch gekennzeichnet, dass** die Plattenteile (15,16) Verbindungsstücke (23,24) umfassen, die sich von den Übergängen (18,19) bis zu einem Abstand (D) davon erstrecken, und dass die Verbindungsstücke (23,24) zu den Übergängen (18,19) hin schmaler werden oder mindestens schmaler ausgeführt sind, mit einer Mindestbreite (B2), die kleiner als die Breite (B1) der gerippten Zone der Plattenteile (15,16) ist.

7. Verbesserte faltbare Trägerstruktur (1) nach Anspruch 1 und 5, **dadurch gekennzeichnet, dass** die Plattenteile (15,16) an ihren freien Enden mit Scharnieren (27) und Verbindungsmitteln (28) versehen sind und dort eine Breite (B3) aufweisen, die größer als die Breite (B1) der gerippten Zone der Plattenteile (15,16) ist.

8. Verbesserte faltbare Trägerstruktur (1) nach Anspruch 1 und 5, **dadurch gekennzeichnet, dass** die Plattenteile (15,16) zwischen den aufeinanderfolgenden Rippen (22) mit Ausnehmungen (31) versehen sind.

9. Verbesserte faltbare Trägerstruktur (1) nach Anspruch 1 und 5, **dadurch gekennzeichnet, dass** die Plattenteile (15,16) an ihrer Unterseite (21) und in der Nähe der entsprechenden Verbindungsstücke (23,24) mit mindestens einem vertieften Teil (32) versehen sind, das als Auflagefläche für die faltbare Trägerstruktur (1) in ihrem entfalteten und gestreckten Zustand dient.

## Revendications

1. Support pliable perfectionné (1) pour des protections (2) comprenant une bâche (5) de camion ou analogue, le support pliable (1) comprenant deux parties en forme de plaques rigides (15, 16) qui sont reliées l'une à l'autre avec leurs extrémités éloignées voisines, **caractérisé en ce que** les extrémités éloignées voisines sont reliées l'une à l'autre au moyen d'une partie médiane déformable (17) qui a été soumise à un pliage ou qui a été soumise à une torsion, qui fait office de zone de pliage du support pliable (1), ladite partie médiane déformable étant soumise à un pliage ou soumise à une torsion lorsque la protection (2) se trouve à l'état fermé.

2. Support pliable perfectionné (1) selon la revendication 1, **caractérisé en ce que** la partie médiane (17) possède une configuration de forme semi-circulaire.

3. Support pliable perfectionné (1) selon la revendication 1, **caractérisé en ce que** les deux parties en forme de plaques rigides (15, 16) possèdent un côté supérieur (20) et un côté inférieur (21), et **en ce que** la partie médiane (17) s'étend principalement sur le côté inférieur des parties (15, 16) en forme de plaques.

4. Support pliable perfectionné (1) selon la revendication 1, **caractérisé en ce que** le support pliable (1) est réalisé en une seule pièce dans un moule.

5. Support pliable perfectionné (1) selon la revendication 1, **caractérisé en ce que** les parties (15, 16) en forme de plaques sont reliées à la partie médiane déformable (17) au moyen de transitions (18, 19) ; et **en ce que** les parties (15, 16) en forme de plaques possèdent un côté supérieur (20) sur lequel s'appuie la bâche (5), et un côté inférieur opposé (21) ; **en ce que** les parties (15, 16) en forme de plaques sont munies de nervures (22) qui s'étendent jusqu'à proximité des extrémités éloignées se détournant l'une de l'autre, sur une distance (D) par rapport aux transitions (18, 19), et **en ce que** les parties en forme de plaques possèdent une largeur (B1) dans cette zone nervurée.

6. Support pliable perfectionné (1) selon les revendications 1 et 5, **caractérisé en ce que** les parties (15, 16) en forme de plaques comprennent des pièces de connexion (23, 24) qui s'étendent sur une distance (D) par rapport aux transitions (18, 19), et **en ce que** les pièces de connexion (23, 24) se rétrécissent à proximité des transitions (18, 19), ou au moins sont rendues plus étroites avec une largeur minimale (B2) qui est inférieure à la largeur (B1) de la zone nervurée des parties (15, 16) en forme de plaques.

7. Support pliable perfectionné (1) selon les revendications 1 et 5, **caractérisé en ce que** les parties (15, 16) en forme de plaques sont munies d'articulations (27) et de moyens de connexion (28) à leurs extrémités libres, et possèdent une largeur (B3) à cet endroit qui est supérieure à la largeur (B1) de la zone nervurée des parties (15, 16) en forme de plaques.

8. Support pliable perfectionné (1) selon les revendications 1 et 5, **caractérisé en ce que** les parties (15, 16), entre les nervures successives. (22), sont munies d'évidements (31).

9. Support pliable perfectionné (1) selon les revendications 1 et 5, **caractérisé en ce que** les parties (15, 16), sur leur côté inférieur (21) et à proximité des pièces de connexion correspondantes (23, 24), sont munies d'au moins une partie renfoncée (32) qui fait office de surface d'appui pour le support pliable (1) à l'état déplié et étiré de ce dernier.
